# EUROPÄISCHE PATENTANMELDUNG

(11) **EP 0 974 298 A1**
(43) Veröffentlichungstag der Anmeldung: **26.01.2000**
(21) Anmeldenummer: 98113507.2
(22) Anmeldetag: 20.07.1998
(51) Int. Cl.: A47J 31/00, A47J 31/10

(54) **Vorrichtung zum Erhitzen einer trinkbaren Flüssigkeit**

(71) Anmelder: Timm, Eberhard, 21279 Appel (DE)
(72) Erfinder: Timm, Eberhard, 21279 Appel (DE)
(74) Vertreter: Glawe, Delfs, Moll & Partner

(57) **Zusammenfassung**

Die Vorrichtung zum Erhitzen einer trinkbaren Flüssigkeit mit einem Ventil verschließbaren Flüssikeitsvorratsbehälter (1), mit einem drin angeordneten elektrischen Heizelement, mit einem Schalter, der die Stromzufuhr zum Heizelement unterbricht, wenn der Vorratsbehälter keine Flüssigkeit aufweist, und mit einem Sammelbehälter (13) für die erhitzte Flüssigkeit, zeichnet sich dadurch aus, daß sie einem weiteren Schalter (7) aufweist, der die Stromzufuhr zum Heizelement nur freigibt, wenn die Vorrichtung auf den Sammelbehälter (13) oder eine Halterung aufgesetzt ist.

## Beschreibung

Die Erfindung betrifft eine Vorrichtung zum Erhitzen einer trinkbaren Flüssigkeit mit einem mit einem Ventil verschließbaren Flüssigkeitsvorratsbehälter, mit einem drin angeordneten elektrischen Heizelement, mit einem Schalter, der die Stromzufuhr zum Heizelement unterbricht, wenn der Vorratsbehälter keine Flüssigkeit aufweist, und mit einem Sammelbehälter für die erhitzte Flüssigkeit.

Mit einer vorbekannten Vorrichtung dieser Art (WO 96/22719) kann man sich unterwegs heiße Getränke wie z. B. Kaffe, Tee, Aufbrühsuppen und dergleichen bereiten, wenn als Stromquelle die Stromversorgung von 12/24 V eines Autos, Boots oder anderen Fahrzeugs zur Verfügung steht. Die Vorrichtung wird zur Bereitung eines heißen Getränkes vom Benutzer mit Wasser gefüllt. Anschließend wird dann der an der Vorrichtung vorgesehene Trichter, durch den das Wasser eingefüllt wurde, hereingedrückt, wodurch das Ventil des Vorratsbehälters geschlossen wird und der Behälter mit einem Überdruck beaufschlagt wird. Durch den Überdruck wird eine Membrane nach außen gedrückt, die einen Schalter schließt, so daß das Heizelement mit Strom versorgt werden kann. Der Überdruck beim Schließen des Behälters ist um so größer, je mehr Wasser in den Vorratsbehälter eingefüllt wurde. Wurde wenig oder gar kein Wasser eingefüllt, so reicht der Überdruck nicht aus, den Schalter zu betätigen. Es ist daher eine Überhitzung des Heizelementes im leeren oder nicht ausreichend gefüllten Vorratsbehälter nicht zu befürchten. Ist das Wasser genügend erwärmt, so öffnet es durch seine Volumenausdehnung das Ventil, und das Wasser strömt über das Brühmaterial in den Sammelbehälter. Der Druck im Vorratsbehälter geht dabei auf Atmosphärendruck zurück, so daß durch den Schalter weiteres Heizen durch das Heizelementes unterbunden wird.

Die vorbekannte Vorrichtung weist dabei einen elektrischen Steckkontakt auf, mit dem sie in ein kofferähnliches Gebilde eingesteckt wird. Wird das Gerät dabei irrtümlich eingeschaltet, obwohl sich unter ihm kein Sammelbehälter befindet, kann kein großer Schaden entstehen, da sich das heiße Wasser im Koffer sammelt.

Einfache Steckkontakte, die die Vorrichtung mit der Stromquelle binden, stehen für Spannungen von 12 V oder 24 V zur Verfügung. Falls das Gerät für Spannungen von 110 V oder 220 V ausgerüstet werden soll, muß es fest mit einem Kabel versehen sein. Dabei besteht dann die Gefahr, daß das Wasser erhitzt wird, obwohl das Gerät gar nicht auf einem Sammelbehälter oder einer Halterung des Koffers ruht. Es kann daher plötzlich heißes Wasser austreten und Verbrühungen hervorrufen.

Die Aufgabe der Erfindung besteht in der Schaffung einer Vorrichtung der eingangs genannten Art, bei der ein unkontrollierter Austritt von erhitztem Wasser unmöglich ist.

Die erfindungsgemäße Lösung besteht darin, daß die Vorrichtung einen weiteren Schalter aufweist, der die Stromzufuhr zu dem Heizelement nur freigibt, wenn die Vorrichtung auf den Sammelbehälter oder eine Halterung aufgesetzt ist. Es muß also nicht nur der Vorratsbehälter mit Wasser gefüllt sein, sondern die Vorrichtung muß auch auf einen Sammelbehälter oder eine Halterung aufgesetzt sein, damit das Wasser erhitzt werden kann. Damit ist die erwähnte Verbrühungsgefahr ausgeschlossen.

Zweckmäßigerweise ist der Sammelbehälter ein Trinkbecher. Der Sammelbehälter kann dabei gleichzeitig als Halterung ausgebildet sein.

Eine besonders einfache Ausführungsform der Vorrichtung zeichnet sich dadurch aus, daß sie einen Schlitz aufweist, in den ein Betätigungselement des weiteren Schalters hineinreicht und in den Rand des Sammelbehälters oder der Halterung einführbar ist. Wenn der Rand in den Schlitz eingeführt ist, wird der weitere Schalter betätigt, um so die Stromversorgung zu ermöglichen.

Damit eine ungewollte Auslösung des Halters z. B. durch einen länglichen Gegenstand, der die selbe Wirkung wie der Rand des Sammelbehälters hat, auszuschließen, ist zweckmäßigerweise vorgesehen, daß am Rand des Sammelbehälters oder der Halterung ein Vorsprung vorgesehen ist, der in den Schlitz einführbar ist. Der Schlitz ist dabei entsprechend zeitlich geschlossen. Dieser Vorsprung kann ein Dorn sein, der z. B. in Verbindung mit dem Henkel angeordnet sein kann. Dieser Dorn könnte als störend empfunden werden. Es ist daher zweckmäßigerweise in eine aktive und eine inaktive Stellung bewegbar, z. B. in den Henkel hineinklappbar oder aber verschiebbar ausgebildet. Der Dorn wird vor der Bereitung des Getränks in die aktive Stellung bewegt und, nach dem das Getränk fertig aufgebrüht ist, in die inaktive Stellung bewegt, damit das Getränk ohne Störung durch den Dorn konsumiert werden kann.

Zweckmäßigerweise ist die Halterung in einem Koffer angebracht. Mit diesem Koffer kann dann die Vorrichtung transportiert werden. Außerdem können in dem Koffer Aufbrühstoffe sowie Trinkbecher untergebracht sein. Diese Ausführungsform ist für Reisen z. B. mit einem Kraftfahrzeug geeignet.

Bei einer anderen vorteilhaften Ausführungsform ist die Halterung als ein Ständer ausgebildet. In diesem Falle kann die Vorrichtung zu Hause verwendet werden. Wenn mehr als eine Halterung miteinander verbunden sind, so kann dabei die Vorrichtung in unterschiedlichen Stellungen gehalten werden. Die drei Stellungen, für die die Halterung ausgebildet sein kann, ist einmal die Stellung, in der die Vorrichtung mit Wasser befüllt wird. Nachdem der Trichter hineingedrückt und damit der Vorratsbehälter geschlossen ist, kann die Vorrichtung gedreht werden, so daß der bisher obere Teil nunmehr nach unten kommt. In dieser Stellung kann sie wieder in die Halterung eingestellt werden, bis sie benötigt wird. Schließlich kann dann in der dritten Arbeitsstellung die Vorrichtung herausgenommen werden, in die Halterung ein Trinkbecher eingesetzt werden und dann die Vorrichtung auf den Trinkbecher gesetzt werden.

Eine weitere vorteilhafte Ausführungsform zeichnet sich dadurch aus, daß mehr als eine Halterung miteinander verbunden ist.

Die erfindungsgemäße Vorrichtung kann großserienmäßig durch Spritzgießen hergestellt werden. Die entsprechenden Teile sind identisch, unabhängig davon, ob die Vorrichtung für 12, 24, 110 oder 220 V ausgelegt ist. Lediglich die Elektrik muß an die Spannung angepaßt sein.

Die Erfindung wird im folgenden anhand von vorteilhaften Ausführungsformen unter Bezugnahme auf die beigefügten Zeichnungen beschrieben. Es zeigen:
- Fig. 1: einen Querschnitt durch die Vorrichtung der Erfindung, der den ersten Schalter zeigt;
- Fig. 2 und 3: einen Querschnitt durch die Vorrichtung mit Sammelbehälter und dem weiteren Schalter in zwei verschiedenen Stellungen;
- Fig. 4 und 5: in seitlicher Ansicht eine andere Ausführungsform mit einer Halterung, wobei Fig. 4 die Ansicht von der Seite und Fig. 5 die Ansicht von vorne zeigt;
- Fig. 6 und 7: eine Seitenansicht mit einer anderen Halterung in zwei verschiedenen Stellungen;
- Fig. 8: eine weitere Ausführungsform mit zwei Halterungen.

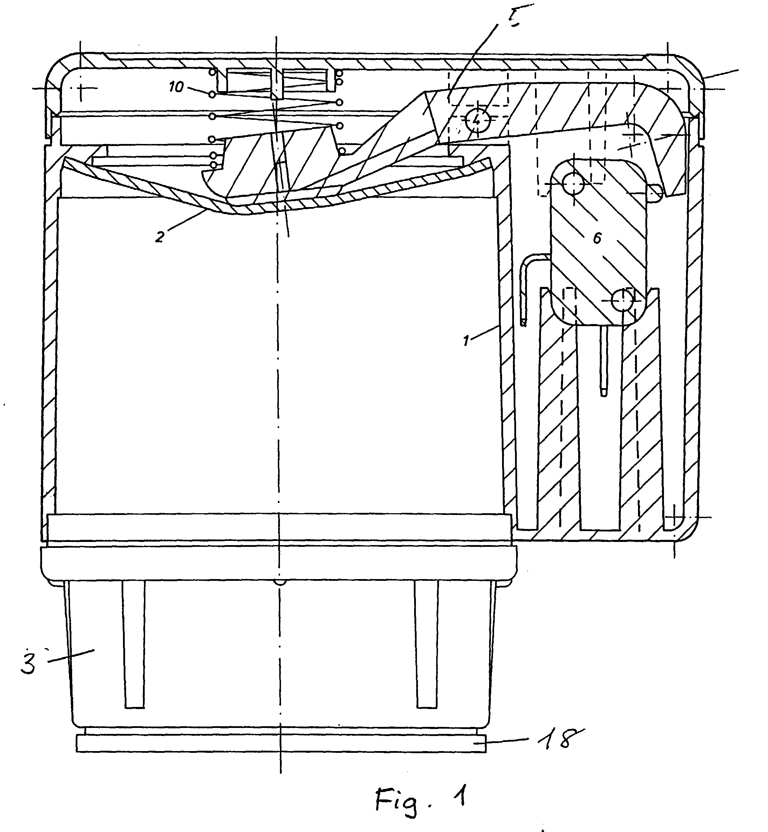

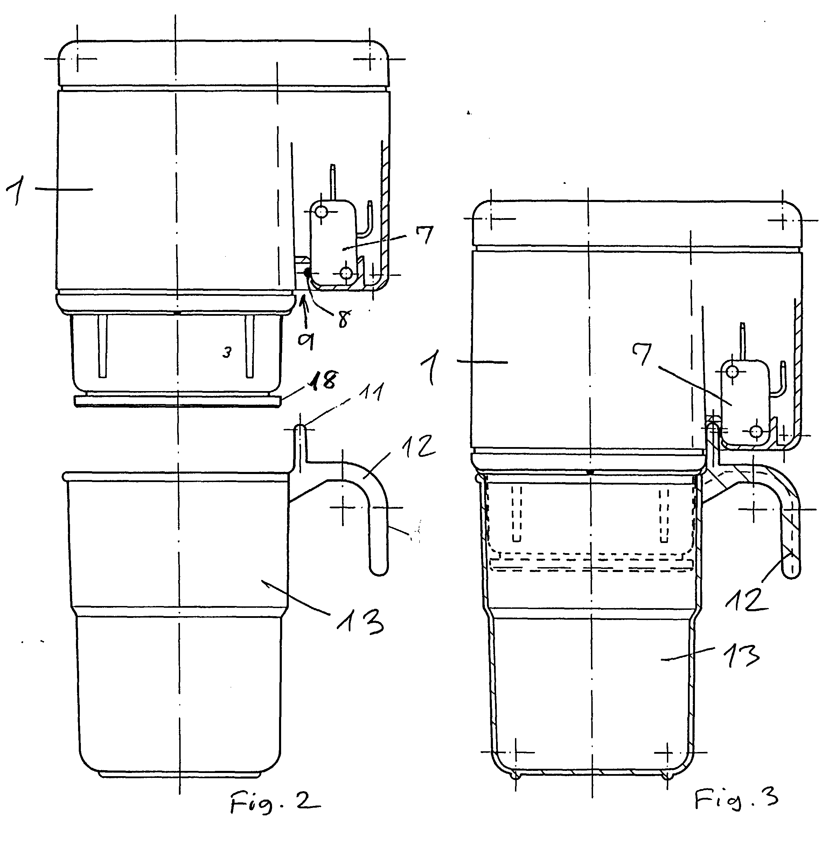

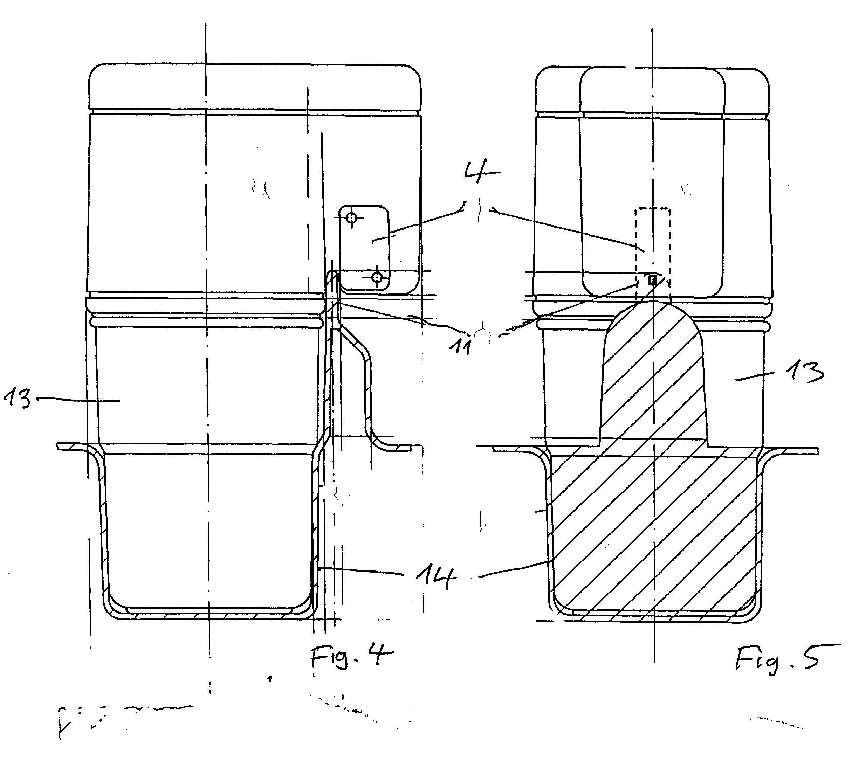

Die Betriebsweise der Vorrichtung, soweit wie sie bereits wie eingangs erwähnt bekannt ist, soll hier nicht weiter beschrieben werden. In Fig. 1 ist der Sammelbehälter 1 gezeigt, der durch den Einlauf/Auslauf 3 gefüllt werden kann, wenn der Behälter gegenüber der Darstellung der Fig. 1 auf den Kopf gestellt ist. Wird dann durch Drücken auf den Teil 3 bzw. damit verbundenen Trichter 18 das Einlaß-/Auslaßventil für die Flüssigkeit geschlossen und der Innendruck in dem Behälter 1 erhöht, so wölbt sich die Membran 2 nach oben, so daß gegen die Kraft einer Feder 10 der Hebel 5 um die Achse 4 verschwenkt wird und dadurch den Schalter 6 betätigt, der dann geschlossen wird. Es kann aber noch kein Strom durch das in den Figuren nicht gezeigte Heizelement fließen, da mit dem Schalter 6 ein weiterer Schalter 7 in Reihe geschaltet ist, der in den Figuren 2 und 3 gezeigt ist und winkelmäßig gegenüber dem Schalter 6 versetzt ist. Das Betätigungselement 8 dieses Schalters 7 ist in einem seitlichen Schlitz 9 angeordnet. In diesen Schlitz 9 kann ein Dorn 11 eingreifen, der an Henkel 12 eines Sammelbehälters 13, z. B. eines Trinkbechers angeordnet ist. Nur wenn der Hauptteil der Vorrichtung auf den Sammelbehälter 13 aufgesetzt ist und der Dorn 11 den Schalter 7 betätigt, wird der Strom zum Heizelement freigegeben. Fig. 2 zeigt die Vorrichtung mit dem Sammelbehälter vor dem Aufsetzen der Vorrichtung auf den Sammelbehälter, während in Fig. 3 gezeigt ist, daß die Vorrichtung auf den Sammelbehälter 13 aufgesetzt ist.

Bei der Ausführungsform der Figuren 4 und 5 ist der Dorn 11 an einer Halterung 14 angebracht, in die der Sammelbehälter 13 eingesetzt ist.

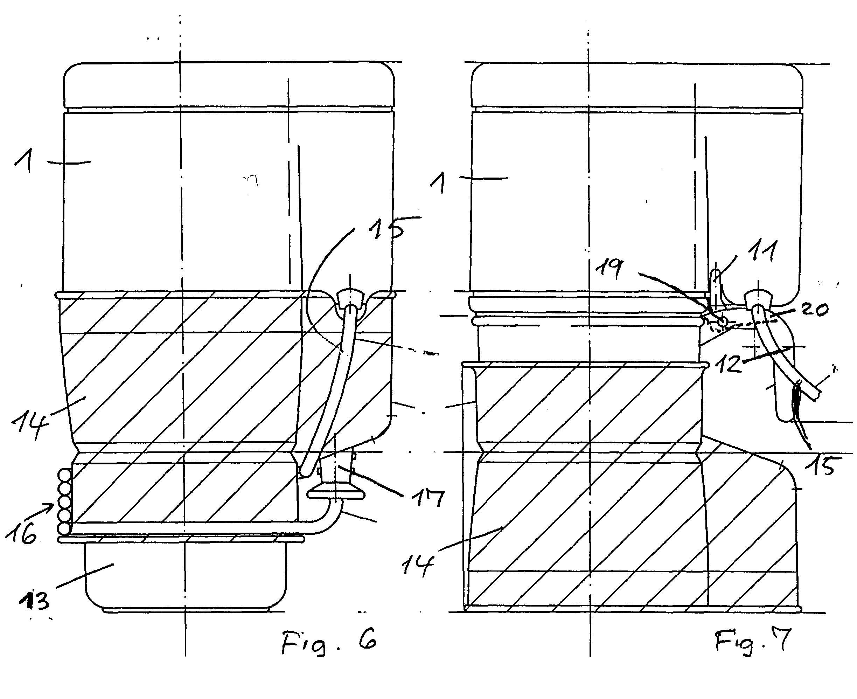

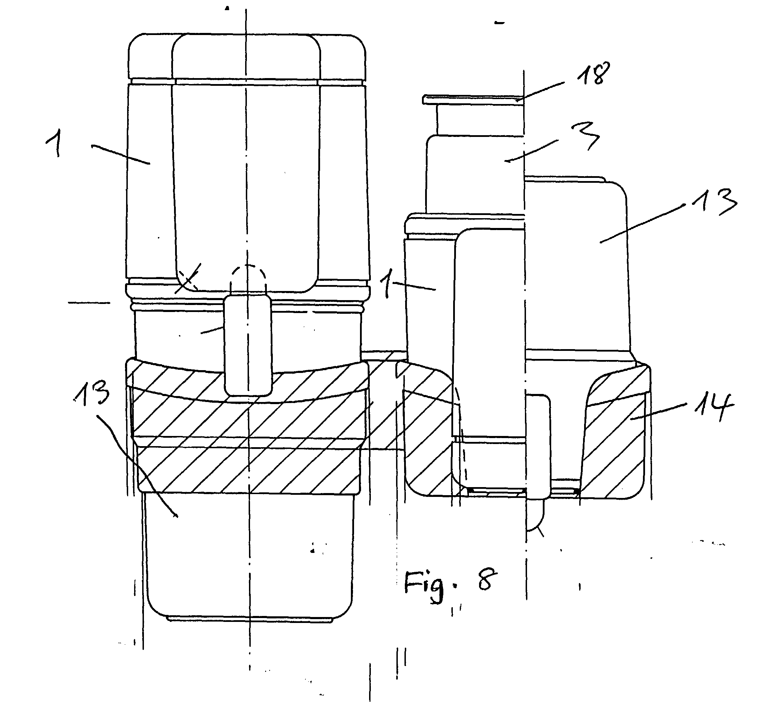

In Fig. 6 und 7 ist eine Halterung 14 dargestellt, die zwei Funktionen hat. Bei der in Fig. 6 dargestellten Stellung ist die Halterung 14 auf die Vorrichtung aufgesteckt, wobei das Kabel 15 bei 16 auf der Halterung 14 aufgewickelt ist und dann der Stecker 17 in die Halterung 14 eingesteckt ist. Dies ist die Transportstellung. In der Betriebsstellung wird die Halterung 14 umgedreht und dient als Ständer. Zu Fig. 7 ist gezeigt, daß der Dorn 11 um eine Achse 19 in eine Ausnehmung des Griffs 12 eingeschwenkt und verrenkt werden kann. Die Ausnehmung ist bei 20 angedeutet. Bei der Ausführungsform der Fig. 8 ist die Halterung 14 mit zwei Aufnahmeöffnungen ausgebildet. Diese Halterung kann z. B. an dem Armaturenbrett eines Kraftfahrzeuges angeschraubt werden. In der linken Aufnahmeöffnung kann die Vorrichtung mit daran angebrachtem Sammelbehälter 13 eingesetzt werden. Rechts sind schematisch zwei Stellungen, durch die Mittellinie getrennt, gezeigt. In der linken Teildarstellung der rechten Aufnahmeöffnung ist die Vorrichtung gegenüber der Position in der linken Aufnahmeöffnung umgekehrt eingesetzt, so daß hier Wasser eingefüllt werden kann. Nachdem dann Wasser eingefüllt ist, kann der Trichter 18 hereingedrückt werden. Rechts ist ein Becher 13 umgekehrt eingesetzt. Die Halterung 14 kann so vielfältigen Zwecken dienen.

## Patentansprüche

1. Vorrichtung zum Erhitzen einer trinkbaren Flüssigkeit mit einem mit einem Ventil verschließbaren Flüssikeitsvorratsbehälter (1), mit einem drin angeordneten elektrischen Heizelement, mit einem Schalter (6), der die Stromzufuhr zum Heizelement unterbricht, wenn der Vorratsbehälter keine Flüssigkeit aufweist, und mit einem Sammelbehälter (13) für die erhitzte Flüssigkeit, dadurch gekennzeichnet, daß sie einem weiteren Schalter (7) aufweist, der die Stromzufuhr zum Heizelement nur freigibt, wenn die Vorrichtung auf den Sammelbehälter (13) oder eine Halterung (14) aufgesetzt ist.

2. Vorrichtung nach Anspruch 1, dadurch gekennzeichnet, daß der Sammelbehälter (13) ein Trinkbecher ist.

3. Vorrichtung nach Anspruch 1, dadurch gekennzeichnet, daß der Sammelbehälter eine Halterung (14) ist.

4. Vorrichtung nach einem der Ansprüche 1 bis 3, dadurch gekennzeichnet, daß sie einen Schlitz (9) aufweist, in den ein Betätigungselement (8) des weiteren Schalters (7) hereinragt und in den der Rand des Sammelbehälters (13) oder der Halterung (14) einführbar ist.

5. Vorrichtung nach einem der Ansprüche 1 bis 3, dadurch gekennzeichnet, daß sie einen Schlitz (9) aufweist, in den ein Betätigungselement (8) des weiteren Schalters (7) hereinragt und in den ein Vorsprung (11) am Rand des Sammelbehälters (13) oder der Halterung (14) einführbar ist.

6. Vorrichtung nach Anspruch 5, dadurch gekennzeichnet, daß der Vorsprung (1) in eine aktive und eine inaktive Stellung bewegbar ist.

7. Vorrichtung nach einem der Ansprüche 1 bis 5, dadurch gekennzeichnet, daß die Halterung (14) in einem Koffer angebracht ist.

8. Vorrichtung nach einem der Ansprüche 1 bis 6, dadurch gekennzeichnet, daß die Halterung (14) als ein Ständer ausgebildet ist.

9. Vorrichtung nach einem der Ansprüche 1 bis 8, dadurch gekennzeichnet, daß mehr als eine Halterung (14) miteinander verbunden sind.

10. Vorrichtung nach einem der Ansprüche 1 bis 9, dadurch gekennzeichnet, daß die Halterung bzw. Halterungen (14) zum Halten der Vorrichtung in unterschiedlichen Betriebsstellungen ausgebildet ist bzw. sind.
